# FASCICULE DE BREVET EUROPEEN

(11) **EP 2 769 910 B1**
(45) Date de publication et mention de la délivrance du brevet: **12.12.2018**
(21) Numéro de dépôt: 14000475.5
(22) Date de dépôt: 11.02.2014
(51) Int. Cl.: B64C 1/00, B64C 25/04, B64C 27/22, B64C 27/26, B64C 39/04, B64C 25/32, B64D 1/22, B64D 47/08

(54) **Giravion à double fuselage**
Drehflügelflugzeug mit Doppelrumpf
Dual-fuselage rotorcraft

(30) Priorité: 22.02.2013 FR 1300411
(43) Date de publication de la demande: 27.08.2014
(73) Titulaire: Airbus Helicopters, 13725 Marignane Cedex (FR)
(72) Inventeur: Nicola, Jean, 13100 Aix-en-Provence (FR)
(74) Mandataire: GPI & Associés

(56) Documents cités:
- EP-A1- 2 261 119
- EP-A2- 1 167 183
- GB-A- 2 434 785
- GB-A- 2 454 531
- US-A- 1 417 884
- US-S1- D 612 317

## Description

La présente invention concerne un giravion comprenant deux fuselages.

L'invention se situe donc dans le domaine technique des giravions, et notamment des giravions à grande vitesse d'avancement comprenant au moins un rotor de sustentation et au moins une hélice propulsive.

Classiquement, un giravion comporte une voilure tournante portée par un fuselage. La voilure tournante assure au moins partiellement la sustentation de l'aéronef, voire au moins partiellement sa propulsion. Une telle voilure tournante est alors pourvue d'au moins un rotor dénommé « rotor de sustentation » par commodité.

De plus, on connaît des giravions munis d'une voilure tournante, ainsi que d'une aile portant au moins une hélice propulsive disposée sur le côté d'un fuselage. Deux hélices propulsives peuvent être par exemple agencées de part et d'autre du fuselage. A cet effet, chaque hélice propulsive est portée par une demi-aile s'étendant transversalement à partir du fuselage de l'aéronef.

Les hélices propulsives participent alors à la propulsion de l'aéronef. De plus, ces hélices peuvent générer un couple d'efforts sur le fuselage pour le contrôle en lacet de l'aéronef.

Un tel giravion est donc dénommé « aéronef hybride » par commodité dans la mesure où une voilure tournante est associée à au moins une hélice propulsive et à au moins une aile.

De tels aéronefs hybrides sont particulièrement intéressants. En effet, les hélices permettent notamment d'atteindre des vitesses d'avancement élevées, et de parcourir des distances importantes.

Cependant, la réalisation d'un aéronef hybride ayant une masse importante, par exemple de l'ordre de 10 tonnes ou plus, peut soulever des difficultés.

En effet, la masse de l'aéronef étant élevée, la voilure tournante est dimensionnée pour assurer la sustentation adéquate. Par rapport à un aéronef hybride de moyen tonnage, la voilure tournante exerce alors un couple en lacet plus important sur le fuselage d'un aéronef hybride de fort tonnage.

Pour compenser cette augmentation de couple par rapport à un aéronef hybride de moyen tonnage, un constructeur éloigne alors les hélices du fuselage.

Toutefois, les pales d'une voilure tournante tendent à fléchir durant leur utilisation, notamment lors des phases de décollage et d'atterrissage. Ce fléchissement augmente en s'éloignant de l'axe de rotation de la voilure tournante.

Par conséquent, en éloignant les hélices du fuselage d'un aéronef hydride, on diminue la distance séparant une hélice d'une pale de la voilure tournante. Une telle distance est dénommée « garde au rotor » par analogie avec l'expression « garde au sol » représentant la distance entre un organe d'un aéronef et le sol lorsque l'aéronef est posé sur ce sol.

Le constructeur tend alors à éloigner chaque hélice du fuselage en la rapprochant du sol pour maintenir une « garde au rotor » acceptable.

Pour obtenir un aéronef hybride de fort tonnage par rapport à un hélicoptère hybride de moyen tonnage, un constructeur doit augmenter la portance générée par la voilure tournante, et éloigner les hélices propulsives du fuselage en les rapprochant du sol.

Cependant, en rapprochant les hélices du sol, l'inclinaison d'une droite fictive passant par un point bas d'une hélice et un point de contact du train d'atterrissage avec le sol est réduite. Autrement dit, l'angle de roulis admissible au sol pour l'aéronef est réduit.

Par conséquent, pour maintenir un angle de roulis acceptable, le constructeur modifie la hauteur du fuselage pour augmenter la garde au sol des hélices. Ledit angle de roulis est ainsi augmenté.

Le constructeur peut aussi agencer des balancines proches des hélices pour éviter un contact entre une hélice et le sol.

Une balancine est un atterrisseur placé sous une hélice dans le cadre d'aéronef de moyen tonnage. La technologie des balancines peut engendrer des difficultés sur des aéronefs très lourds, en impliquant par exemple le renforcement de l'aile portant les hélices.

Pour compenser une perte de stabilité créée par cette hauteur accrue, la largeur du fuselage est aussi éventuellement substantiellement augmentée.

Un constructeur obtient ainsi un aéronef hybride de fort tonnage.

Toutefois, cet aéronef hybride présente alors un fuselage ayant une surface frontale importante. On entend par commodité par « surface frontale » la surface du fuselage en contact avec l'air durant un vol d'avancement. La traînée de l'aéronef hybride de fort tonnage risque alors de dégrader ses performances.

L'invention se situe dans ce contexte dans le domaine technique restreint des giravions comprenant une voilure tournante et deux hélices propulsives, et vise à éviter une telle dégradation.

Parmi l'arrière plan technologique éloigné du domaine technique, le document US 1885392 présente un avion muni de deux fuselages et d'une aile.

De même, les avions connus sous les dénominations « Messerschmitt Me 109Z » et « P82 twin mustang » comprennent aussi deux fuselages et une aile.

Le document FR 1330233 a pour objet un hélicoptère grue muni d'un fuselage accueillant un poste de pilotage et d'un fuselage accueillant du matériel de bord.

Ces documents ne paraissent pas fournir un enseignement visant à résoudre le problème technique objectif lié à l'augmentation de la traînée provoquée par l'augmentation du tonnage d'un aéronef hybride.

Par ailleurs, l'arrière plan technologique inclut aussi un concept d'aéronef convertible de la NASA connu sous l'acronyme V.T.R.A.F.T. Cet aéronef est muni de deux rotors basculants agencés de part et d'autre de deux fuselages.

Ce concept relève donc du domaine technique éloigné des aéronefs convertibles munis de rotors basculants.

Selon le document « NASA TILT ROTOR DESIGN REPORT » sur le réseau internet à l'adresse http://www.dept.aoe.vt.edu/∼mason/Mason f/VTRAFT final report. pdf, cet aéronef comporte deux fuselages pour améliorer la stabilité d'un aéronef convertible amphibie sur l'eau. Ainsi, l'aéronef peut amerrir pour puiser de l'eau afin de lutter contre des incendies.

On connaît aussi les documents EP 2.261.119, qui est considéré comme l'art antérieur le plus proche et décrit les caractéristiques du préambule de la revendication 1, GB 2.454.531, US 1.417.884, US D 612.317, GB 2.434.785, et EP 1.167.183.

La présente invention a alors pour objet de proposer un giravion muni d'une voilure tournante et de deux hélices propulsives tendant à présenter un fort tonnage et une surface frontale optimisée.

Selon l'invention, un giravion est muni d'un rotor de sustentation, ce giravion étant pourvu d'une aile fixe s'étendant d'une première extrémité portant une première hélice propulsive vers une deuxième extrémité portant une deuxième hélice propulsive, ce giravion comprenant un train d'atterrissage et un empennage.

Un tel giravion est donc éloigné du concept V.T.R.A.F.T se situant dans le domaine technique éloigné des aéronefs convertibles, et non pas des giravions munis d'un rotor de sustentation. Le concept V.T.R.A.F.T n'est d'ailleurs pas concerné par la problématique liée au maintien d'une garde au rotor acceptable, en étant dépourvu d'un rotor de sustentation.

Ce giravion est notamment remarquable en étant pourvu de deux fuselages solidarisés à ladite aile entre lesdites première et deuxième hélices propulsives de manière à présenter un espace inter-fuselage dépourvu d'hélices entre lesdits fuselages, chaque fuselage comportant au moins un atterrisseur du train d'atterrissage.

En outre, l'aile peut être une aile continue ou discontinue. Par exemple, une aile discontinue comporte une demi-aile portant la première hélice et s'étendant transversalement à partir d'un fuselage, une demi-aile portant la deuxième hélice et s'étendant transversalement à partir de l'autre fuselage, et une aile centrale s'étendant entre les fuselages.

Par ailleurs, l'empennage peut comprendre une pluralité de plan de sustentation et/ou d'orientations, tel qu'au moins une dérive horizontale et / ou verticale et / ou oblique.

Ce giravion permet ainsi de minimiser la surface frontale d'un aéronef hybride de fort tonnage.

En effet, au lieu de mettre en oeuvre un unique fuselage, ce giravion comprend deux fuselages séparés transversalement par une espace dit « espace inter-fuselage » par commodité.

Chaque fuselage est décalé latéralement du plan antéropostérieur de symétrie de l'aéronef vers une hélice propulsive pour ménager l'espace inter-fuselage.

La mise en oeuvre d'un espace inter-fuselage éloigne donc chaque fuselage d'un plan antéropostérieur de symétrie de l'aéronef. Par conséquent, chaque atterrisseur porté par un fuselage est rapproché d'une hélice propulsive. Cette caractéristique permet l'atterrissage de l'aéronef sur des sols présentant des pentes latérales accrues par rapport à un aéronef classique.

Dès lors, cette construction confère un angle de roulis important à l'aéronef, sans nécessiter de mettre oeuvre un fuselage ayant une surface frontale importante.

De plus, chaque fuselage porte au moins un atterrisseur. L'espace inter-fuselage induit de fait un espacement maximisé entre les atterrisseurs d'un fuselage et les atterrisseurs de l'autre fuselage. Par rapport à un aéronef comportant un unique fuselage porté par des atterrisseurs, l'invention tend donc à induire une stabilité latérale intéressante. Une telle caractéristique tend donc à amoindrir les risques de renversement au sol en présence d'un vent violent ou sur le pont d'un navire.

Par conséquent, l'aéronef peut présenter un fort tonnage en étant pourvu de deux fuselages allongés présentant chacun une surface frontale tendant à être minimisée.

Ce giravion répond donc de manière innovante au problème technique soulevé pour obtenir un giravion de fort tonnage avec un giravion muni d'un rotor de sustentation et deux hélices propulsives.

Par construction, les hélices propulsives sont de plus agencées de part et d'autre de l'ensemble comprenant les deux fuselages. Aucune hélice propulsive n'est alors agencée dans l'espace inter-fuselage. L'aéronef présente alors une zone sécurisé entre les deux fuselages.

Ce giravion peut de plus comporter une ou plusieurs des caractéristiques additionnelles qui suivent.

Eventuellement, chaque fuselage peut comporter au moins une porte débouchant sur l'espace inter-fuselage. Par exemple, un premier fuselage comporte une première porte latérale faisant face à une deuxième porte latérale du deuxième fuselage.

L'embarquement de passagers dans le giravion peut donc être réalisé par le côté de chaque fuselage au travers des portes débouchant sur l'espace inter-fuselage. Par suite, les passagers évoluent dans l'espace inter-fuselage pour rejoindre leur siège, et donc évoluent dans une zone dépourvue des hélices propulsives. Leur sécurité est alors améliorée, même si les hélices propulsives sont en rotation.

Par ailleurs, le rotor de sustentation peut être solidarisé à l'aile à l'aplomb de l'espace inter-fuselage.

Ce giravion peut alors comporter un mât rotor d'entraînement en rotation du rotor de sustentation agencé sur l'aile dans un plan médian de symétrie de cette aile à l'aplomb de l'espace inter-fuselage. Plus particulièrement, le rotor de sustentation est présent dans le plan antéropostérieur de symétrie de l'aéronef, le mât rotor d'entraînement en rotation du rotor de sustentation étant contenu dans ce plan antéropostérieur.

L'équilibre du giravion est alors optimisé.

Par ailleurs, chaque fuselage peut être muni d'un atterrisseur avant et d'un atterrisseur arrière comprenant au moins une roue, tel que des atterrisseurs rétractables à roue. Le train d'atterrissage est alors pourvu de quatre atterrisseurs ce qui optimise la stabilité du giravion au sol.

Par ailleurs, au moins un fuselage peut porter un système de treuillage agencé dans l'espace inter-fuselage.

Cet emplacement permet d'éviter une interférence entre le système de treuillage et une hélice propulsive en vol. L'opération de treuillage est alors sécurisée du point de vue des hélices propulsives.

Deux systèmes de treuillage peuvent en outre être utilisés sur un même giravion, en alternance par exemple.

Chaque système de treuillage est éventuellement agencé sous l'aile. Le treuilliste et le système de treuillage ne sont alors pas soumis directement au souffle d'air provenant du rotor de sustentation. L'opération de treuillage est ainsi facilitée.

Par ailleurs, le giravion peut comporter un système de soutènement présent dans l'espace inter-fuselage, ce système de soutènement étant fixé à l'aile sous un mât rotor entraînant en rotation le rotor de sustentation. Le système de soutènement peut comprendre au moins un crochet fixe ou mobile attaché à l'aile.

L'espace inter-fuselage créé entre les deux fuselages permet ainsi l'intégration d'un système de soutènement destiné à soulever des charges lourdes. L'agencement du mât rotor à l'aplomb de ce système de soutènement tend à minimiser les efforts, et donc à induire un potentiel gain de masse sur l'intégration de cette fonction sur le giravion.

Selon un premier mode de réalisation, le giravion comporte une unique poutre de queue solidarisée à l'aile pour porter l'empennage.

Selon un deuxième mode de réalisation, chaque fuselage comporte une poutre de queue pour porter l'empennage.

Par ailleurs, chaque fuselage peut porter au moins un dispositif de flottabilité. L'espace inter-fuselage induit un écartement des dispositifs de flottabilité du giravion tendant à améliorer la stabilité de l'aéronef sur une surface liquide.

Selon un autre aspect, chaque fuselage peut porter un moteur pour entraîner en rotation le rotor de sustentation ainsi que les première et deuxième hélices propulsives via une chaîne cinématique de transmission du mouvement.

En complément ou de manière alternative, l'aile peut porter au moins un moteur pour entraîner en rotation le rotor de sustentation et les première et deuxième hélices propulsives via une chaîne cinématique de transmission du mouvement.

Par exemple, l'aile porte l'ensemble des moteurs d'entraînement du rotor de sustentation et des hélices.

En outre, chaque fuselage peut comporter un cockpit pour un membre d'équipage et une cabine comprenant deux rangées de siège sans couloir.

L'agencement d'un pilote dans chaque cockpit permet de répondre aux exigences relatives à la visibilité des pilotes.

De plus, la réglementation impose la présence d'un membre d'équipage circulant dans la cabine à partir d'un nombre seuil de passagers.

En mettant en place deux fuselages, chaque fuselage peut accueillir éventuellement la moitié du nombre de passagers pouvant être accueillis par un aéronef ayant un seul fuselage. Dès lors, il est envisageable d'éviter la présence d'un membre d'équipage dans chaque fuselage.

En outre, chaque fuselage peut comporter un cockpit pour un membre d'équipage et une cabine comprenant une pluralité de rangées de sièges sans couloir, le giravion comprenant une porte débouchant sur ledit espace inter-fuselage pour permettre l'accès à au moins deux rangées de sièges.

Dès lors, chaque fuselage peut avoir une hauteur limitée. En effet, tous les sièges sont accessibles par une porte, et l'absence de couloir permet d'éviter la mise en place d'un fuselage pouvant accueillir un homme debout.

Par suite, la traînée du giravion est optimisée.

En outre, chaque fuselage peut porter une caméra thermique de pilotage. Ainsi, l'aéronef peut comporter un pilote dans chaque fuselage, chaque pilote ayant à sa disposition une caméra thermique de pilotage.

D'autres types d'équipements peuvent être utilisés, tels que des phares de recherche, de systèmes connus sous les acronymes FLIR ou EOS, des détecteurs d'obstacles... Ces équipements peuvent être placés sous les deux cockpits pour éviter un montage sur le côté de l'appareil afin de générer un gain de masse et d'optimiser la traînée.

La présence des deux cockpits permet de plus l'installation de deux équipements sous les pointes avant des fuselages sans problème de performances, ces performances n'étant notamment pas dégradées par un masque visuel créé par un fuselage.

L'invention et ses avantages apparaîtront avec plus de détails dans le cadre de la description qui suit avec des exemples de réalisation donnés à titre illustratif en référence aux figures annexées qui représentent :
- les figures 1 et 2, des figures présentant un premier mode de réalisation,
- les figures 3 et 4, des figures présentant un deuxième mode de réalisation,
- la figure 5, un schéma explicitant une procédure d'embarquement de passagers,
- la figure 6, un schéma présentant l'agencement de systèmes de treuillage,
- la figure 7, un schéma présentant l'agencement d'un système de soutènement, et
- la figure 8, un schéma présentant des cabines des fuselages d'un giravion selon l'invention.

Les éléments présents dans plusieurs figures distinctes sont affectés d'une seule et même référence.

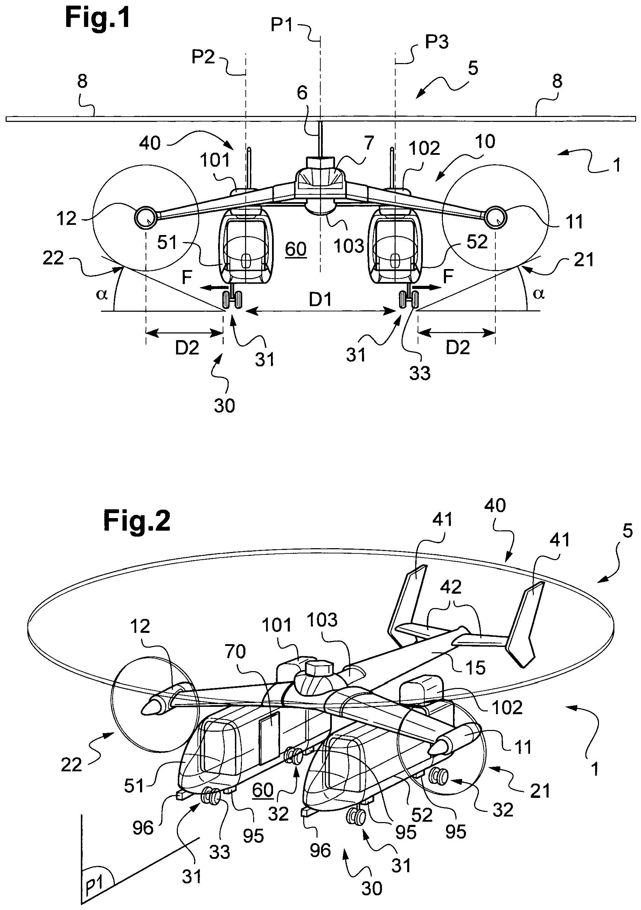

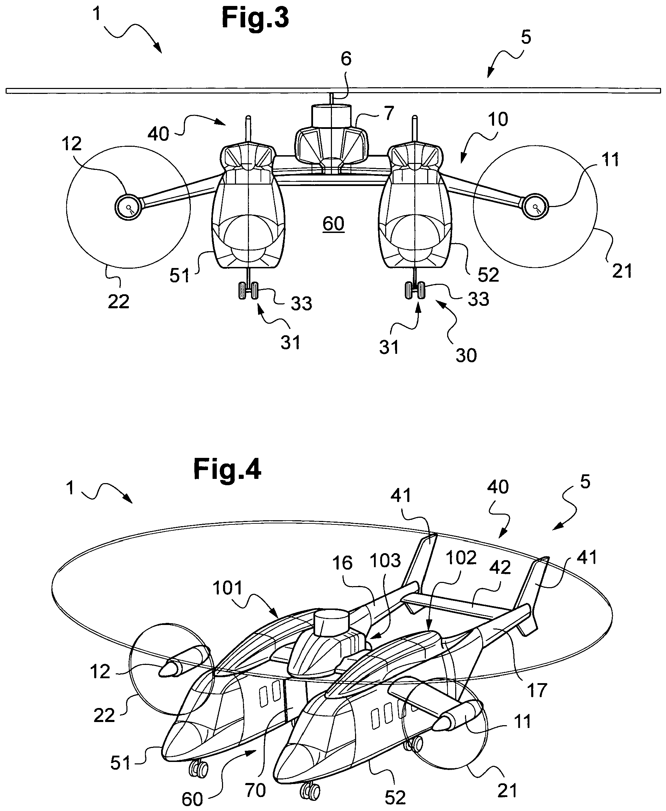

Les figures 1 à 2 présentent un giravion 1 selon un premier mode de réalisation, les figures 3 à 4 présentant un giravion 1 selon un deuxième mode de réalisation.

En référence à la figure 1 et indépendamment du mode de réalisation, le giravion 1 comporte un rotor de sustentation 5 comprenant une pluralité de pales 8. Ce rotor de sustentation peut le cas échéant participer à la propulsion du giravion 1.

Le giravion 1 comprend de plus une voilure fixe incluant une aile 10 s'étendant selon son envergure d'une première extrémité 11 vers une deuxième extrémité 12, en passant par un plan antéropostérieur P1 de symétrie du giravion. L'aile peut être continue ou discontinue en présentant plusieurs tronçons.

Le rotor de sustentation 5 est alors porté par l'aile 10. Par exemple, l'aile 10 porte une boîte de transmission de puissance 7 mettant en mouvement un mât rotor 6. Le mât rotor 6 entraîne alors en rotation le rotor de sustentation 5 en rotation autour d'un axe de rotation.

De plus, le giravion 1 comprend une première hélice propulsive 21 et une deuxième hélice propulsive 22. La première hélice propulsive 21 est agencée à la première extrémité 11 de l'aile 10, la deuxième hélice propulsive 22 étant agencée à la deuxième extrémité 12 de l'aile 10.

Il est à noter que l'on entend par « extrémité de l'aile », la zone extrémale d'une aile. L'aile peut donc inclure une portion sustentatrice de part et d'autre d'une hélice selon une variante non représentée, ou une portion sustentatrice sur un unique côté d'une hélice selon la variante représentée lorsque chaque hélice est agencée à un bout d'une aile.

Par ailleurs, le giravion 1 est muni de deux fuselages 51, 52 solidarisés à l'aile 10 entre la première hélice propulsive 21 et la deuxième hélice propulsive 22. Le premier fuselage 51 et le deuxième fuselage 52 sont séparés l'un de l'autre par un espace inter-fuselage 60. Par suite, le premier fuselage 51 est disposé entre le plan antéropostérieur P1 et la première hélice propulsive 21, le deuxième fuselage 52 étant disposé entre le plan antéropostérieur P1 et la deuxième hélice propulsive 22.

Le rotor de sustentation 5 est alors solidarisé à l'aile 10 à l'aplomb de l'espace inter-fuselage 60. De même, le mât rotor 6 d'entraînement en rotation du rotor de sustentation 5 est agencé dans le plan antéropostérieur P1 de symétrie de cette aile 10 à l'aplomb de l'espace inter-fuselage 60.

L'espace inter-fuselage est donc dépourvu d'un élément tournant, et n'accueille notamment pas une hélice propulsive.

En référence aux figures 2 et 4, chaque fuselage 51, 52 comprend au moins une porte 70 en regard de l'espace inter-fuselage 60.

De plus, chaque fuselage 51, 52 est équipé d'au moins un atterrisseur du train d'atterrissage 30. Par exemple, chaque fuselage 51, 52 est muni d'un atterrisseur avant 31 et d'un atterrisseur arrière 32 comprenant au moins une roue 33.

Les atterrisseurs sont favorablement mais non exclusivement rétractables dans un compartiment du fuselage associé.

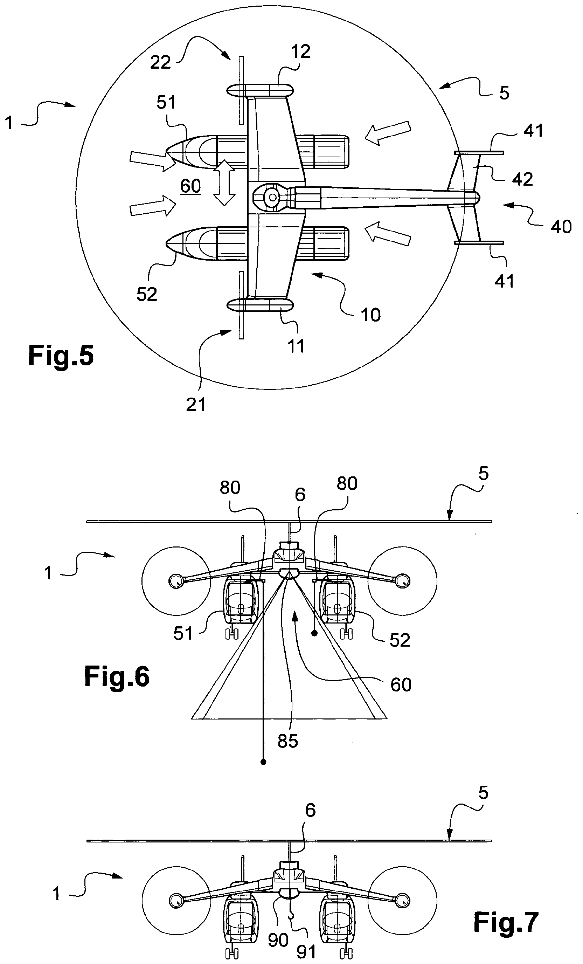

En référence à la figure 5, des passagers peuvent dans ces conditions embarquer dans l'aéronef en traversant l'espace inter-fuselage 60 selon les flèches représentées.

En référence à la figure 1, l'espace inter-fuselage 60 tend à éloigner transversalement un atterrisseur dit « atterrisseur gauche » par commodité du premier fuselage 51 d'un atterrisseur dit « atterrisseur droit » par commodité du deuxième fuselage 52. La première distance transversale D1 est alors maximisée pour optimiser la stabilité de l'aéronef notamment en roulis.

A l'inverse, la deuxième distance transversale D2 séparant les atterrisseurs d'un fuselage de l'hélice propulsive adjacente est minimisée. La pente d'un sol acceptable durant un atterrissage est alors optimisée.

L'inclinaison α d'une droite fictive passant par un point bas d'une hélice et un point de contact du train d'atterrissage avec le sol est maximisée sans augmenter la hauteur des fuselages.

A cet effet, chaque atterrisseur peut être décalé selon les flèches F par rapport à un plan de symétrie P2, P3 du fuselage associé pour être rapproché d'une hélice.

Par ailleurs et en référence aux figures 2 et 4, le giravion 1 comporte une installation motrice pour l'entraînement en rotation du rotor de sustentation 5, de la première hélice propulsive 21 et de la deuxième hélice propulsive 22.

Cette installation motrice peut alors comprendre au moins un moteur 101, 102 dit « latéral » porté par chaque fuselage, et / ou au moins un moteur 103 dit « central » porté par l'aile 10. Les moteurs sont reliés par une chaîne cinématique de transmission de puissance au rotor de sustentation et aux hélices propulsives.

En outre, le giravion 1 comporte un empennage 40. Cet empennage peut comporter des dérives verticales 41 pour le contrôle en lacet de ce giravion, et/ou des dérives horizontales 42 pour le contrôle en tangage de ce giravion. Par exemple, deux dérives verticales sont reliées par une dérive horizontale.

Chaque dérive peut comporter des plans fixes, mais aussi des parties mobiles telles que des volets.

Selon le premier mode de réalisation de la figure 2, le giravion 1 comporte une unique poutre de queue 15 solidarisée à l'aile 10 pour porter l'empennage 40. L'unique poutre de queue 15 peut relier l'aile 10 à une dérive horizontale 42.

Selon le deuxième mode de réalisation de la figure 4, le giravion comporte deux poutres de queue. Ainsi, chaque fuselage 51, 52 est muni d'une poutre de queue 16, 17 pour porter l'empennage 40.

En référence à la figure 6, au moins un fuselage 51, 52 porte un système de treuillage 80. Chaque système de treuillage est agencé dans l'espace inter-fuselage 60. Un phare 85 peut être porté par l'aile, sous le mât rotor par exemple.

Favorablement, chaque système de treuillage 80 est agencé sous l'aile 10 pour être protégé du flux d'air provenant du rotor de sustentation.

En référence à la figure 7, le giravion 1 est éventuellement équipé d'un système de soutènement 90 dans l'espace inter-fuselage 60. Le système de soutènement 90 est alors fixé à l'aile 10 sous le mât rotor 6 par exemple. Ce système de soutènement 90 inclut à titre d'exemple au moins un crochet 91, voire un moyen de mobilité de ce crochet.

Par ailleurs, selon la variante de la figure 2, chaque fuselage est équipé d'un dispositif de flottabilité 95, tel qu'un dispositif usuel.

En outre, chaque fuselage porte au niveau de sa pointe avant une caméra thermique 96, tel qu'un dispositif connu sous l'acronyme FLIR.

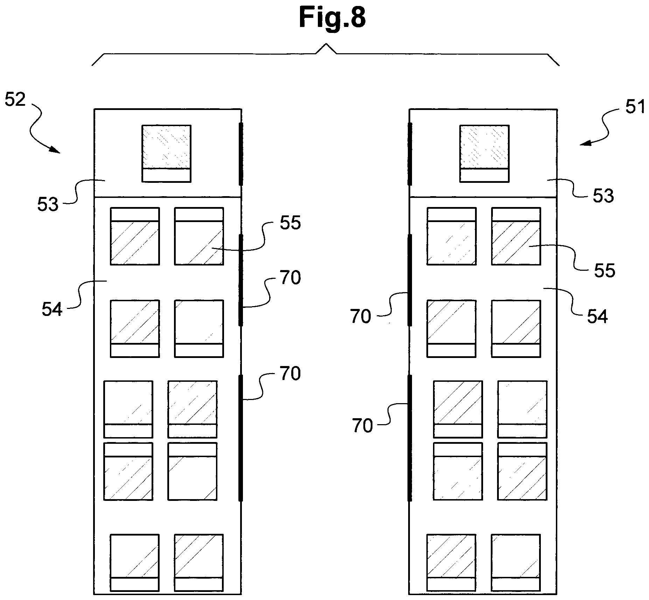

Dès lors et en référence à la figure 8, chaque fuselage peut inclure un cockpit 53 accueillant un pilote. Chaque pilote a alors à sa disposition une caméra thermique.

De plus, chaque fuselage représenté accueille une cabine 54 dans laquelle sont agencés deux rangées de sièges 55 sans couloir. Le nombre de sièges présents dans chaque fuselage n'impose en effet pas la présence d'un membre d'équipage dans la cabine, et donc la présence d'un couloir. L'espace disponible pour chaque passager est ainsi optimisé.

De plus, le fuselage peut avoir une hauteur minimisée. En effet, tous les sièges sont accessibles de l'extérieur par des portes latérales. Un passager n'a alors pas besoin de se déplacer dans le fuselage.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Giravion (1) muni d'un rotor de sustentation (5), ledit giravion (1) étant pourvu d'une aile (10) s'étendant d'une première extrémité (11) portant une première hélice propulsive (21) vers une deuxième extrémité (12) portant une deuxième hélice propulsive (22), ledit giravion (1) comprenant un train d'atterrissage (30) et un empennage (40),
**caractérisé en ce que** ledit giravion (1) est pourvu de deux fuselages (51, 52) solidarisés à ladite aile (10) entre lesdites première et deuxième hélices propulsives (21, 22) de manière à présenter un espace inter-fuselage (60) dépourvu d'hélice entre lesdits fuselages (51, 52), chaque fuselage (51, 52) comportant au moins un atterrisseur (31, 32) dudit train d'atterrissage (30).

2. Giravion selon la revendication 1,
**caractérisé en ce que** ledit rotor de sustentation (5) est solidarisé à ladite aile (10) à l'aplomb dudit espace inter-fuselage (60).

3. Giravion selon la revendication 1,
**caractérisé en ce que** ledit giravion (1) comporte un mât rotor (6) d'entraînement en rotation du rotor de sustentation (5) agencé sur ladite aile (10) dans un plan antéropostérieur (P1) de symétrie de cette aile (10) à l'aplomb dudit espace inter-fuselage (60).

4. Giravion selon l'une quelconque des revendications 1 à 3,
**caractérisé en ce que** chaque fuselage (51, 52) est muni d'un atterrisseur avant (31) et d'un atterrisseur arrière (32) comprenant au moins une roue (33).

5. Giravion selon l'une quelconque des revendications 1 à 4,
**caractérisé en ce qu'**au moins un fuselage (51, 52) porte un système de treuillage (80) agencé dans ledit espace inter-fuselage (60).

6. Giravion selon la revendication 5,
**caractérisé en ce que** ledit système de treuillage (80) est agencé sous ladite aile (10).

7. Giravion selon l'une quelconque des revendications 1 à 6,
**caractérisé en ce que** ledit giravion (1) comporte un système de soutènement (90) présent dans ledit espace inter-fuselage (60), ledit système de soutènement (90) étant fixé à ladite aile (10) sous un mât rotor (6) entraînant en rotation ledit rotor de sustentation (5).

8. Giravion selon l'une quelconque des revendications 1 à 7,
**caractérisé en ce que** ledit giravion (1) comporte une unique poutre de queue (15) solidarisée à ladite aile (10) pour porter ledit empennage (40).

9. Giravion selon l'une quelconque des revendications 1 à 7,
**caractérisé en ce que** chaque fuselage (51, 52) comporte une poutre de queue (16, 17) pour porter ledit empennage (40).

10. Giravion selon l'une quelconque des revendications 1 à 9,
**caractérisé en ce que** chaque fuselage (51, 52) porte au moins un dispositif de flottabilité (95).

11. Giravion selon l'une quelconque des revendications 1 à 10,
**caractérisé en ce que** chaque fuselage (51, 52) porte un moteur (101, 102) pour entraîner en rotation ledit rotor de sustentation (5) et lesdites première et deuxième hélices propulsives (21, 22) via une chaîne cinématique de transmission du mouvement.

12. Giravion selon l'une quelconque des revendications 1 à 11,
**caractérisé en ce que** ladite aile (10) porte au moins un moteur (103) pour entraîner ledit rotor de sustentation (5) et lesdites première et deuxième hélices propulsives (21, 22) via une chaîne cinématique de transmission du mouvement.

13. Giravion selon l'une quelconque des revendications 1 à 12,
**caractérisé en ce que** chaque fuselage (51, 52) comporte un cockpit (53) pour un membre d'équipage et une cabine (54) comprenant deux rangées de sièges (55) sans couloir.

14. Giravion selon l'une quelconque des revendications 1 à 13,
**caractérisé en ce que** chaque fuselage (51, 52) comporte un cockpit (53) pour un membre d'équipage et une cabine (54) comprenant une pluralité de rangées de sièges (55) sans couloir, le giravion comprenant une porte débouchant sur ledit espace inter-fuselage pour permettre l'accès à au moins deux rangées.

15. Giravion selon l'une quelconque des revendications 1 à 14,
**caractérisé en ce que** chaque fuselage (51, 52) porte une caméra thermique de pilotage (96).

16. Giravion selon l'une quelconque des revendications 1 à 14,
**caractérisé en ce que** chaque fuselage (51, 52) comporte au moins une porte (70) débouchant sur ledit espace inter-fuselage (60).

## Patentansprüche

1. Drehflügelflugzeug (1), das mit einem Hubrotor (5) ausgestattet ist, wobei das Drehflügelflugzeug (1) mit einem Flügel (10) versehen ist, der sich von einem ersten Ende (11), das einen ersten Vortriebspropeller (21) trägt, zu einem zweiten Ende (12) erstreckt, das einen zweiten Vortriebspropeller (22) trägt, wobei das Drehflügelflugzeug (1) ein Fahrwerk (30) und ein Leitwerk (40) aufweist,
**dadurch gekennzeichnet, dass** das Drehflügelflugzeug (1) mit zwei Rümpfen (51, 52) versehen ist, die an dem Flügel (10) zwischen dem ersten und dem zweiten Vortriebspropeller (21, 22) derart fest verbunden sind, um einen Rumpfzwischenraum (60) aufzuweisen, der mit einem Propeller zwischen den Rümpfen (51, 52) versehen ist, wobei jeder Rumpf (51, 52) mindestens ein Landegestell (31, 32) des Fahrwerks (30) aufweist.

2. Drehflügelflugzeug nach Anspruch 1, **dadurch gekennzeichnet, dass** der Hubrotor (5) mit dem Flügel (10) senkrecht zu dem Rumpfzwischenraum (60) fest verbunden ist.

3. Drehflügelflugzeug nach Anspruch 1, **dadurch gekennzeichnet, dass** das Drehflügelflugzeug (1) einen Rotormast (6) zum Indrehungversetzen des Hubrotors (5) aufweist, der auf dem Flügel (10) in einer anteroposterioren Symmetrieebene (P1) dieses Flügels (10) senkrecht zu dem Rumpfzwischenraum (60) angeordnet ist.

4. Drehflügelflugzeug nach einem der Ansprüche 1 bis 3, **dadurch gekennzeichnet, dass** jeder Rumpf (51, 52) mit einem vorderen Landegestell (31) und einem hinteren Landegestell (32) versehen ist, die mindestens ein Rad (33) aufweisen.

5. Drehflügelflugzeug nach einem der Ansprüche 1 bis 4, **dadurch gekennzeichnet, dass** mindestens ein Rumpf (51, 52) ein Windensystem (80) trägt, das in dem Rumpfzwischenraum (60) angeordnet ist.

6. Drehflügelflugzeug nach Anspruch 5, **dadurch gekennzeichnet, dass** das Windensystem (80) unter dem Flügel (10) angeordnet ist.

7. Drehflügelflugzeug nach einem der Ansprüche 1 bis 6, **dadurch gekennzeichnet, dass** das Drehflügelflugzeug (1) ein Stützsystem (90) aufweist, das in dem Rumpfzwischenraum (60) vorhanden ist, wobei das Stützsystem (90) an dem Flügel (10) unter einem Rotormast (6) befestigt ist, der den Hubrotor (5) in Drehung versetzt.

8. Drehflügelflugzeug nach einem der Ansprüche 1 bis 7, **dadurch gekennzeichnet, dass** das Drehflügelflugzeug (1) einen einzigen Leitwerksträger (15) aufweist, der mit dem Flügel (10) fest verbunden ist, um das Leitwerk (40) zu tragen.

9. Drehflügelflugzeug nach einem der Ansprüche 1 bis 7, **dadurch gekennzeichnet, dass** jeder Rumpf (51, 52) einen Leitwerksträger (16, 17) aufweist, um das Leitwerk (40) zu tragen.

10. Drehflügelflugzeug nach einem der Ansprüche 1 bis 9, **dadurch gekennzeichnet, dass** jeder Rumpf (51, 52) mindestens eine Auftriebsvorrichtung (95) trägt.

11. Drehflügelflugzeug nach einem der Ansprüche 1 bis 10, **dadurch gekennzeichnet, dass** jeder Rumpf (51, 52) einen Motor (101, 102) trägt, um den Hubrotor (5) und den ersten und den zweiten Vortriebspropeller (21, 22) über eine kinematische Bewegungsübertragungskette in Drehung zu versetzen.

12. Drehflügelflugzeug nach einem der Ansprüche 1 bis 11, **dadurch gekennzeichnet, dass** der Flügel (10) mindestens einen Motor (103) trägt, um den Hubrotor (5) und den ersten und den zweiten Vortriebspropeller (21, 22) über eine kinematische Bewegungsübertragungskette anzutreiben.

13. Drehflügelflugzeug nach einem der Ansprüche 1 bis 12, **dadurch gekennzeichnet, dass** jeder Rumpf (51, 52) ein Cockpit (53) für ein Besatzungsmitglied und eine Kabine (54) aufweist, die zwei Sitzreihen (55) ohne Gang aufweist.

14. Drehflügelflugzeug nach einem der Ansprüche 1 bis 13, **dadurch gekennzeichnet, dass** jeder Rumpf (51, 52) ein Cockpit (53) für ein Besatzungsmitglied und eine Kabine (54) aufweist, die mehrere Sitzreihen (55) ohne Gang aufweist, wobei das Drehflügelflugzeug eine Tür aufweist, die zu dem Rumpfzwischenraum führt, um den Zugang zu mindestens zwei Reihen zu ermöglichen.

15. Drehflügelflugzeug nach einem der Ansprüche 1 bis 14, **dadurch gekennzeichnet, dass** jeder Rumpf (51, 52) eine Wärmebildkamera zum Steuern (96) trägt.

16. Drehflügelflugzeug nach einem der Ansprüche 1 bis 14, **dadurch gekennzeichnet, dass** jeder Rumpf (51, 52) mindestens eine Tür (70) aufweist, die zu dem Rumpfzwischenraum (60) führt.

## Claims

1. Rotorcraft (1) equipped with a lifting rotor (5), said rotorcraft (1) being provided with a wing (10) which extends from a first end (11) having a first pusher propeller (21) towards a second end (12) having a second pusher propeller (22), said rotorcraft (1) comprising an undercarriage (30) and a tail assembly (40), **characterised in that** said rotorcraft (1) is provided with two fuselages (51, 52) rigidly connected to said wing (10) between said first and second pusher propellers (21, 22) such that there is an inter-fuselage space (60), free of propellers, between said fuselages (51, 52), each fuselage (51, 52) comprising at least one landing gear (31, 32) of said undercarriage (30).

2. Rotorcraft according to claim 1, **characterised in that** said lifting rotor (5) is rigidly connected to said wing (10) so as to be vertically perpendicular to said inter-fuselage space (60).

3. Rotorcraft according to claim 1, **characterised in that** said rotorcraft (1) comprises a rotor mast (6) which is intended for rotating the lifting rotor (5) and is arranged on said wing (10) in an anteroposterior plane (P1) of symmetry of said wing (10) so as to be vertically perpendicular to said inter-fuselage space (60).

4. Rotorcraft according to any of claims 1 to 3, **characterised in that** each fuselage (51, 52) is provided with a front landing gear (31) and a rear landing gear (32) comprising at least one wheel (33).

5. Rotorcraft according to any of claims 1 to 4, **characterised in that** at least one fuselage (51, 52) has a hoisting system (80) arranged in said inter-fuselage space (60).

6. Rotorcraft according to claim 5, **characterised in that** said hoisting system (80) is arranged under said wing (10).

7. Rotorcraft according to any of claims 1 to 6, **characterised in that** said rotorcraft (1) comprises a support system (90) in said inter-fuselage space (60), said support system (90) being secured to said wing (10) under a rotor mast (6) which rotates said lifting rotor (5).

8. Rotorcraft according to any of claims 1 to 7, **characterised in that** said rotorcraft (1) comprises a single tail boom (15) which is rigidly connected to said wing (10) and is intended for supporting said tail assembly (40).

9. Rotorcraft according to any of claims 1 to 7, **characterised in that** each fuselage (51, 52) comprises a tail boom (16, 17) for supporting said tail assembly (40).

10. Rotorcraft according to any of claims 1 to 9, **characterised in that** each fuselage (51, 52) has at least one floatation device (95).

11. Rotorcraft according to any of claims 1 to 10, **characterised in that** each fuselage (51, 52) has a motor (101, 102) for rotating said lifting rotor (5) and said first and second pusher propellers (21, 22) by means of a kinematic chain for transmitting movement.

12. Rotorcraft according to any of claims 1 to 11, **characterised in that** said wing (10) has at least one motor (103) for driving said lifting rotor (5) and said first and second pusher propellers (21, 22) by means of a kinematic chain for transmitting movement.

13. Rotorcraft according to any of claims 1 to 12, **characterised in that** each fuselage (51, 52) comprises a cockpit (53) for a crew member, and a cabin (54) comprising two rows of seats (55) without an aisle.

14. Rotorcraft according to any of claims 1 to 13, **characterised in that** each fuselage (51, 52) comprises a cockpit (53) for a crew member, and a cabin (54) comprising a plurality of rows of seats (55) without an aisle, the rotorcraft comprising a door which opens onto said inter-fuselage space so as to allow access to at least two rows.

15. Rotorcraft according to any of claims 1 to 14, **characterised in that** each fuselage (51, 52) has a piloting thermal imaging camera (96).

16. Rotorcraft according to any of claims 1 to 14, **characterised in that** each fuselage (51, 52) comprises at least one door (70) which opens onto said inter-fuselage space (60).
